# EUROPEAN PATENT SPECIFICATION

(11) **EP 3 627 059 B1**
(45) Date of publication and mention of the grant of the patent: **21.06.2023**
(21) Application number: 19190419.2
(22) Date of filing: 07.08.2019
(51) Int. Cl.: F24D 19/00, B01D 29/11, B03C 1/033, B01D 29/31, B01D 35/06, B03C 1/28, B03C 1/30

(54) **WARM WATER CIRCULATION DEVICE WITH MAGNETIC FILTER**
WARMWASSERZIRKULATIONSVORRICHTUNG MIT MAGNETISCHEM FILTER
DISPOSITIF DE CIRCULATION D'EAU CHAUDE AVEC FILTRE MAGNÉTIQUE

(30) Priority: 21.09.2018 JP 2018177666
(43) Date of publication of application: 25.03.2020
(73) Proprietor: Panasonic Intellectual Property Management Co., Ltd., Osaka-shi, Osaka 540-6207 (JP)
(72) Inventor: YANAGISAWA, Tadashi, Osaka, 540-6207 (JP); FUJIMOTO, Takanobu, Osaka, 540-6207 (JP); NOMURA, Masakazu, Osaka, 540-6207 (JP); WATANABE, Kenichi, Osaka, 540-6207 (JP); NAKAJIMA, Tetsuya, Osaka, 540-6207 (JP)
(74) Representative: Eisenführ Speiser

(56) References cited:
- EP-A1- 3 159 313
- WO-A1-2018/215788
- JP-A- 2001 232 114
- JP-A- 2010 279 886
- JP-A- 2015 167 883

## Description

### [TECHNICAL FIELD]

The present invention relates to a warm water circulation device.

### [BACKGROUND TECHNIQUE]

In a device of this kind through which warm water flows, there exists a conventional structure having the following means for collecting foreign matters which flow together with warm water.

A main body has a sidewall having an inlet and an outlet for water supply. A plate-shaped mesh-like filter which is warped in an arc form is inserted into the main body from its opening bottom.

A sheet material is installed on an inner bottom surface of a bottom lid in which a magnet is embedded, and the bottom lid is mounted on a position where the outlet is covered along an inner peripheral surface of the sidewall of the main body such that the bottom lid can be inserted and removed.

According to this, iron in the supplied water which flows in from the inlet is adsorbed by a magnetic force of the magnet, the iron is precipitated onto the sheet material, and impurities in the supplied water is removed by a filter.

The precipitated iron are cleaned by turning the bottom lid and detaching the bottom lid from the main body, and further detaching the sheet material from the bottom lid. The impurities which are removed by the filter are cleaned by pulling out the filter from the opening bottom of the main body (see patent document 1).

In patent document 2, a filter for treating a fluid in the piping of heating and/or cooling systems is disclosed. The filter comprises a cylindrical body having an internal chamber, with a magnetic filtering element and a mesh type-filtering element housed in said chamber. A plug covers a portion of the cylindrical body and allows removal of the filtering elements.

Furthermore, strainer devices of substantially Y-shape are known from patent documents 3 and 4. Said strainer devices include coaxially arranged inflow and outflow ports and a flow path extending therethrough. A filter mounting portion inclines with respect to the flow path, with a mesh-type filter element and a magnetic filter element arranged therein. A cap covers the end of said filter mounting portion, for allowing access to the mesh-type filter element and a magnetic filter element.

### [PRIOR ART DOCUMENTS]

### [PATENT DOCUMENTS]

[Patent Document 1] Japanese Patent Application Laid-open No.2001-232114
[Patent Document 2] EP patent application 3 159 313 A1
[Patent Document 3] Japanese Patent Application Laid-open No.2010-279886
[Patent Document 4] Japanese Patent Application Laid-open No.2015-167883

### [SUMMARY OF THE INVENTION]

### [PROBLEM TO BE SOLVED BY THE INVENTION]

In the above-described conventional structure, however, since the magnet is disposed below the mesh-like filter, there is a problem that a size of a part for collecting the foreign matters which flows together with the warm water becomes large.

The present invention is for solving the conventional problem, and it is an object of the invention to provide a warm water circulation device capable of miniaturizing a part for collecting foreign matters which flow together with warm water.

### [MEANS FOR SOLVING THE PROBLEM]

To solve the conventional problem, the present invention provides a warm water circulation device including: a heat source; a heating medium circulation circuit through which a heating medium heated by the heat source circulates; a filter-mounting section including a heating medium flow path portion which forms a flow path of the heating medium, and a filter storing section which is inclined with respect to the heating medium flow path portion and which stores a cylindrical filter having a function to collect a foreign matter, wherein one end opening of the filter storing section is located in the heating medium flow path portion; and a sealing plug mounted detachably on the other end opening of the filter storing section and being provided with a magnet storing section for covering a periphery of a magnet and storing the magnet; an upper end of at least the magnet storing section is located higher than a lower end of the filter in a height direction of the warm water circulation device; the heat source and the heating medium circulation circuit are placed in one exterior body having an opening, the opening is placed at a position opposed to the filter-mounting section; the filter-mounting section is placed in the heating medium circulation circuit downstream from a heating medium backward port and upstream from a circulation pump; the filter-mounting section is placed at a position in the exterior body opposed to an exterior side plate of the exterior body at the same height as that of the heating medium backward port; the opening is provided with an opening/closing plate which closes the opening, and the opening/closing plate is fixed to the exterior side plate through a fastening tool (e.g. screw), and closes the opening in normal times; and the filter-mounting section is placed in the exterior body such that the heating medium flow path portion is directed in a horizontal direction, the other end opening of the filter storing section is located downstream of the heating medium flow path portion from the one end opening of the filter storing section, and the other end opening of the filter storing section is located at a position lower than the heating medium flow path portion.

According to this, in the height direction, an upper end of the magnet storing section which covers at least the periphery of the magnet and in which the magnet is stored is located higher than the lower end of the filter which has a function to collect foreign matters. Therefore, it is possible to miniaturize a part for removing foreign matters which are generated and flow through the heating medium circulation circuit when heating medium circulation circuit and a heating terminal are connected to each other at the time of installation of the warm water circulation device and when a pipe which connects the heating medium circulation circuit and the heating terminal to each other is dilapidated.

Further, since the magnet is not in direct contact with the heating medium, a possibility of corrosion and the like is low, and endurance of the magnet can be enhanced.

### [EFFECT OF THE INVENTION]

According to the present invention, it is possible to provide a warm water circulation device capable of miniaturizing a part for collecting foreign matters which flow together with warm water.

### [BRIEF DESCRIPTION OF THE DRAWINGS]

Fig. 1 is a system block diagram of a warm water circulation device of a first embodiment of the present invention;
Fig. 2 is a perspective view of an outward appearance of the warm water circulation device;
Fig. 3 is a side view of the warm water circulation device;
Fig. 4 is a perspective view of an outward appearance of a filter-mounting section of the warm water circulation device;
Fig. 5 is a partial sectional view of the filter-mounting section;
Fig. 6 is a partial sectional view of a valve section of the filter-mounting section of the warm water circulation device;
Fig. 7(a) is a diagram of a structure before the filter-mounting section and a heating medium pipes of the warm water circulation device in the first embodiment of the invention are connected to each other, and Fig. 7(b) is a diagram of a structure after the filter-mounting section and the heating medium pipes are connected to each other;
Fig. 8 is a part development view of the filter-mounting section of the warm water circulation device in the first embodiment of the invention; and
Fig. 9 is a part development view of a sealing plug of the warm water circulation device.

### [MODE FOR CARRYING OUT THE INVENTION]

A first aspect of the present invention provides a warm water circulation device including: a heat source; a heating medium circulation circuit through which a heating medium heated by the heat source circulates; a filter-mounting section including a heating medium flow path portion which forms a flow path of the heating medium, and a filter storing section which is inclined with respect to the heating medium flow path portion and which stores a cylindrical filter having a function to collect a foreign matter, wherein one end opening of the filter storing section is located in the heating medium flow path portion; and a sealing plug mounted detachably on the other end opening of the filter storing section and being provided with a magnet storing section for covering a periphery of a magnet and storing the magnet; an upper end of at least the magnet storing section is located higher than a lower end of the filter in a height direction of the warm water circulation device; the heat source and the heating medium circulation circuit are placed in one exterior body having an opening, the opening is placed at a position opposed to the filter-mounting section; the filter-mounting section is placed in the heating medium circulation circuit downstream from a heating medium backward port and upstream from a circulation pump; the filter-mounting section is placed at a position in the exterior body opposed to an exterior side plate of the exterior body at the same height as that of the heating medium backward port; the opening is provided with an opening/closing plate which closes the opening, and the opening/closing plate is fixed to the exterior side plate through a fastening tool (e.g. screw), and closes the opening in normal times; and the filter-mounting section is placed in the exterior body such that the heating medium flow path portion is directed in a horizontal direction, the other end opening of the filter storing section is located downstream of the heating medium flow path portion from the one end opening of the filter storing section, and the other end opening of the filter storing section is located at a position lower than the heating medium flow path portion.

According to this, in the height direction, an upper end of the magnet storing section which covers at least the periphery of the magnet and in which the magnet is stored is located higher than the lower end of the filter which has a function to collect foreign matters. Therefore, it is possible to miniaturize a part for removing foreign matters which are generated and flow through the heating medium circulation circuit when heating medium circulation circuit and a heating terminal are connected to each other at the time of installation of the warm water circulation device and when a pipe which connects the heating medium circulation circuit and the heating terminal to each other is dilapidated.

Further, since the magnet is not in direct contact with the heating medium, a possibility of corrosion and the like is low, and endurance of the magnet can be enhanced.

Accordingly, when the sealing plug is detached from the heating medium circulation circuit, the magnet stored in the magnet storing section is also detached from the heating medium circulation circuit at the same time.

Therefore, it is possible to easily remove foreign matters of magnetic bodies which adhere to an outer surface of the magnet storing section by detaching the sealing plug from the heating medium circulation circuit, and it is possible to provide a warm water circulation device having excellent maintainability.

According to a second aspect of the invention, in the first aspect, the magnet storing section is made of non-magnetic body material, and the magnet is detachably stored in the magnet storing section.

According to this, since the heating medium and the foreign matters of the magnetic bodies in the heating medium circulation circuit do not directly adhere to the magnet, a possibility of corrosion and the like is low, and endurance of the magnet can be enhanced.

Further, since the magnet is covered with the non-magnetic body, foreign matters of the magnetic bodies in the heating medium circulation circuit do not directly adhere to the magnet, and the foreign matters adhere to the outer surface of the magnet storing section by an adsorption force of the magnet.

Therefore, since the adsorption force of the magnet with respect to the foreign matters of the magnetic bodies which adhere to the outer surface of the magnet storing section is interrupted or blocked by removing the magnet storing section from the heating medium circulation circuit and detaching the magnet from the magnet storing section, it is possible to easily remove the foreign matters of the magnetic bodies which adhere to the outer surface of the magnet storing section, and it is possible to provide a warm water circulation device having excellent maintainability.

According to a third aspect of the invention, in the first aspect, the sealing plug detachably holds the filter.

According to this, when the sealing plug is mounted on the heating medium circulation circuit, the filter and the magnet stored in the magnet storing section can be placed on the heating medium circulation circuit at the same time.

Therefore, it is possible to remove the foreign matters of the magnetic bodies flowing through the heating medium circulation circuit, and to provide a warm water circulation device having excellent assemblability.

According to this, when the sealing plug is mounted on the heating medium circulation circuit, the filter and the magnet stored in the magnet storing section can be placed on the heating medium circulation circuit at the same time.

According to a fourth aspect of the invention, in the second aspect, the non-magnetic body material is resin or non-magnetic body metal.

According to this, since the heating medium and the foreign matters of the magnetic bodies in the heating medium circulation circuit do not directly adhere to the magnet, a possibility of corrosion and the like is low, and endurance of the magnet can be enhanced.

According to a fifth aspect of the invention, in the first aspect, the heat source is a cooling medium circuit, and the heating medium is water or antifreeze liquid.

According to this, it is possible to provide a heat pump warm water heating device having excellent endurance with respect to foreign matters of the magnetic bodies flowing through the heating medium circulation circuit and excellent operation efficiency.

An embodiment of the present invention will be described below with reference to the drawings. The invention is not limited to the embodiment.

### (First Embodiment)

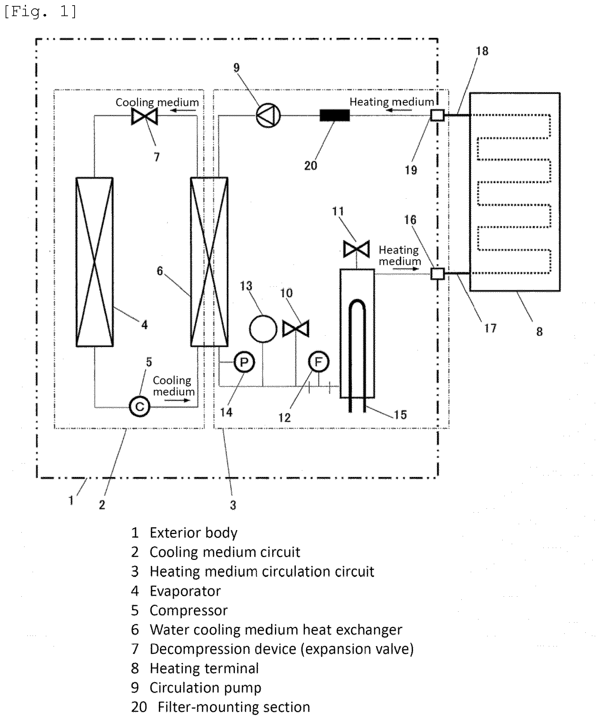

Fig. 1 is a system block diagram of a heat pump warm water heating device which is a warm water circulation device of a first embodiment of the present invention. In Fig. 1, arrows show flows of a cooling medium and flows of a heating medium such as water and antifreeze liquid.

As shown in Fig. 1, the heat pump warm water heating device in this embodiment is composed of a cooling medium circuit 2 and a heating medium circulation circuit 3. The cooling medium circuit 2 and the heating medium circulation circuit 3 are placed in one exterior body 1.

The cooling medium circuit 2 functions as a heat source 2 of the heat pump warm water heating device, and is composed by sequentially and annularly connecting a compressor 5, a water cooling medium heat exchanger 6, a decompression device (expansion valve) 7 and an evaporator 4 to one another through a cooling medium pipe. The compressor 5 compresses a cooling medium to high temperature and high pressure. The water cooling medium heat exchanger 6 heat-exchanges between a cooling medium and a heating medium such as water and antifreeze liquid. The decompression device (expansion valve ) 7 decompresses a cooling medium after it radiates heat in the water cooling medium heat exchanger 6. The evaporator 4 heat-exchanges between air and a cooling medium. As a cooling medium which circulates in the cooling medium circuit, R410A, R32 or carbon dioxide is used.

The heating medium circulation circuit 3 is composed by sequentially connecting, through a heating medium pipe, a filter-mounting section 20, a circulation pump 9, the water cooling medium heat exchanger 6 and an auxiliary heater 15 to one another from a heating medium backward (in-bound) port 19 to a heating medium forward (out-bound) port 16. The heating medium pipe of the heating medium circulation circuit 3 is provided with a pressure relief valve 10, a purge valve 11, a flow sensor 12, an expansion tank 13 and a pressure gauge 14. The pressure relief valve 10, the purge valve 11, the flow sensor 12, the expansion tank 13 and the pressure gauge 14 are placed downstream from the filter-mounting section 20. In this embodiment, the pressure relief valve 10, the flow sensor 12, the expansion tank 13 and the pressure gauge 14 are placed downstream from the water cooling medium heat exchanger 6, and the purge valve 11 is placed in a pipe provided with the auxiliary heater 15.

By driving the circulation pump 9, a heating medium flows in from the heating medium backward port 19, and flows toward the water cooling medium heat exchanger 6, and the heating medium is heated by a cooling medium which flows through the high temperature and high pressure water cooling medium heat exchanger 6 compressed by the compressor 5. The heated high temperature heating medium flows out from the heating medium forward port 16.

A heating medium backward (in-bound) pipe 18 is connected to the heating medium backward port 19, and a heating medium forward (out-bound) pipe 17 is connected to the heating medium forward port 16. The heating medium in-bound pipe 18 connects a heating terminal 8 and the heating medium backward port 19 to each other, and the heating medium out-bound pipe 17 connects the heating terminal 8 and the heating medium forward port 16 to each other.

By driving the circulation pump 9, the high temperature heating medium is conveyed from the heating medium forward port 16 to the heating terminal 8, and after the heating medium radiates heat in the heating terminal 8, the heating medium again flows from the heating medium backward port 19 into the heating medium circulation circuit 3. The heating medium which flows from the heating medium backward port 19 into the heating medium circulation circuit 3 passes through the filter-mounting section 20, the circulation pump 9, the water cooling medium heat exchanger 6 and the auxiliary heater 15, and is conveyed from the heating medium forward port 16 to the heating terminal 8.

The filter-mounting section 20 is placed in the heating medium circulation circuit 3 downstream from the heating medium backward port 19 and upstream from the circulation pump 9.

The heating medium which is heated and produced by the water cooling medium heat exchanger 6 is supplied from the heating medium circulation circuit 3 to the heating terminal 8 through the heating medium forward pipe 17, the heating medium heats a room and then, it returns from the heating terminal 8 to the heating medium circulation circuit 3 through the heating medium backward pipe 18.

The heating terminal 8 may be a panel-like external radiator such as a radiation heater/cooler, or a fan convector having a panel heater or a blower fan.

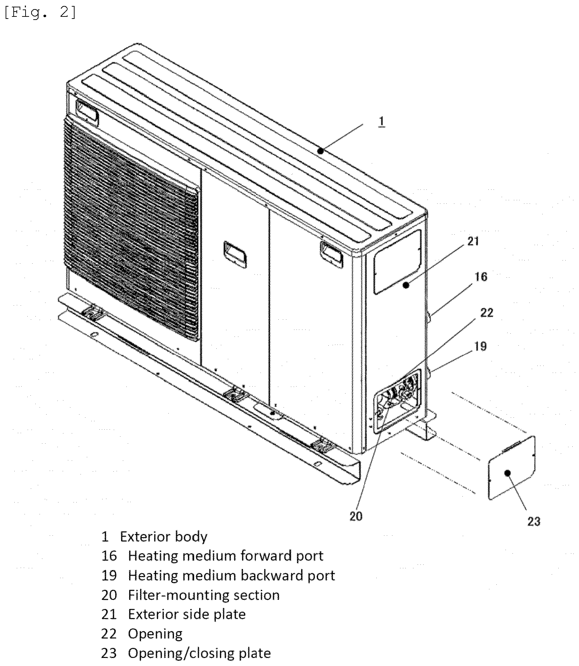

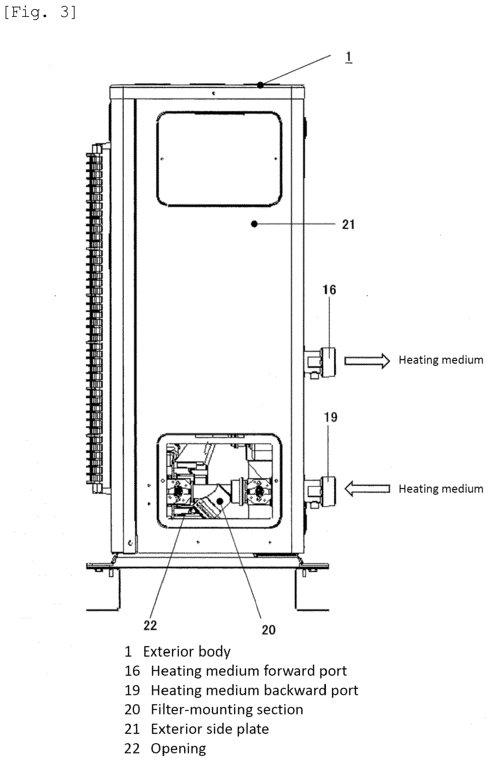

Next, a structure of the heat pump warm water heating device in this embodiment will be described using Figs. 2 and 3.

As shown in Figs. 2 and 3, a back surface of the exterior body 1 is provided with the heating medium forward port 16 and the heating medium backward port 19. The heating medium backward port 19 is placed on the back surface of the exterior body 1 at a position lower than the heating medium forward port 16.

The filter-mounting section 20 is placed at a position in the exterior body 1 opposed to an exterior side plate 21 of the exterior body 1 at the same height as that of the heating medium backward port 19. The exterior side plate 21 configures a side surface of the exterior body 1.

The exterior side plate 21 is provided with an opening 22. The opening 22 is placed at a position opposed to the filter-mounting section 20. The opening 22 is provided with an opening/closing plate 23 which closes the opening 22. The opening/closing plate 23 is fixed to the exterior side plate 21 through a fastening tool (e.g., screw), and closes the opening 22 in normal times. By detaching the opening/closing plate 23 from the exterior side plate 21, maintenance of the filter-mounting section 20 can be performed from the opening 22.

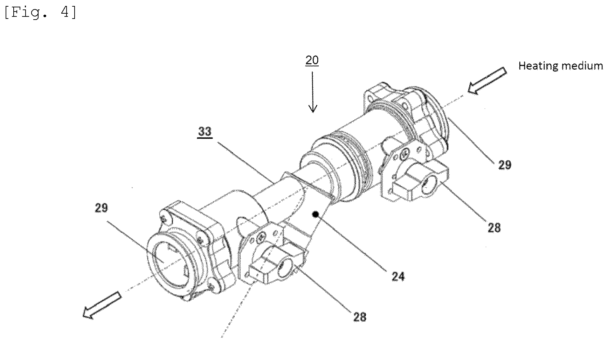

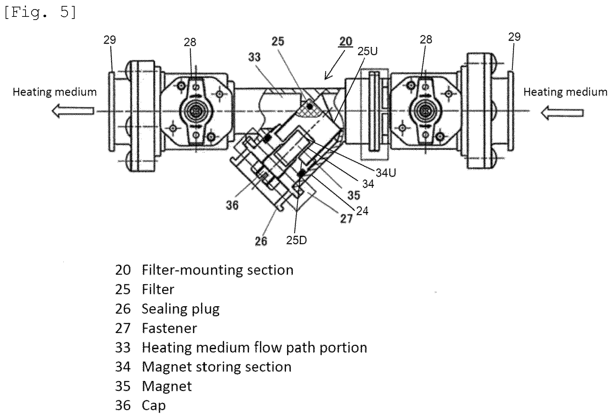

As shown in Figs. 4 and 5, the filter-mounting section 20 includes a heating medium flow path portion 33 which forms a flow path of a heating medium, and a filter storing section 24 which is inclined with respect to the heating medium flow path portion 33.

One end opening of the filter storing section 24 is located in the heating medium flow path portion 33, and a sealing plug 26 is detachably mounted on the other end opening of the filter storing section 24.

The filter-mounting section 20 is placed in the exterior body 1 such that the heating medium flow path portion 33 is directed in a horizontal direction, the other end opening of the filter storing section 24 is located downstream of the heating medium flow path portion 33 from the one end opening of the filter storing section 24, and the other end opening of the filter storing section 24 is located at a position lower than the heating medium flow path portion 33.

A cylindrical filter 25 is stored in the filter storing section 24.

The sealing plug 26 is provided with a magnet storing section 34. A magnet 35 can be stored in the magnet storing section 34. An upper end 34U of the magnet storing section 34 is placed in the filter storing section 24 in a state where the sealing plug 26 is mounted on the filter storing section 24.

One end (upper end) 25U of the cylindrical filter 25 abuts against the heating medium flow path portion 33 and the other end (lower end) 25D of the cylindrical filter 25 abuts against the sealing plug 26 in a state where the sealing plug 26 is mounted on the filter storing section 24.

The filter storing section 24 is inclined downward with respect to the heating medium flow path portion 33 and the filter storing section 24 projects downward from the heating medium flow path portion 33 in a state where the filter-mounting section 20 is placed in the exterior body 1. Therefore, the cylindrical filter 25 is also inclined downward with respect to the heating medium flow path portion 33, and is located at a position projecting downward from the heating medium flow path portion 33.

The upper end 34U of the magnet storing section 34 is located inside the cylindrical filter 25 in a state where the sealing plug 26 is mounted on the filter storing section 24. That is, the upper end 34U of the magnet storing section 34 is located higher than at least the lower end 25D of the filter 25 and lower than an upper end 25U of the filter 25 in the height direction in a state where the filter-mounting section 20 is placed in the exterior body 1. Therefore, the upper end 34U of the magnet storing section 34 is located between the upper end 25U and the lower end 25D of the filter 25 in a state where the sealing plug 26 is mounte4d on the filter storing section 24.

The magnet storing section 34 covers a periphery of the magnet 35 so that a heating medium flowing through the heating medium flow path portion 33 does not come into direct contact with the magnet 35. The magnet storing section 34 is made of non-magnetic body. As a material of the non-magnetic body, it is possible to use resin or non-magnetic body metal such as brass.

An upper end opening of the cylindrical filter 25 is inclined with respect to the heating medium flow path portion 33. According to this, a heating medium flowing through the heating medium flow path portion 33 enters the filter 25 from the upper end opening of the cylindrical filter 25 and passes through a side surface of the filter 25.

The filter 25 collects foreign matters which are mixed in the heating medium circulation circuit 3 or the heating terminal 8. Foreign matters of magnetic bodies such as iron powder and copper mixed in the heating medium circulation circuit 3 or the heating terminal 8 adhere to the outer surface of the magnet storing section 34 by an adsorption force of the magnet 35 stored in the magnet storing section 34 located inside the filter 25.

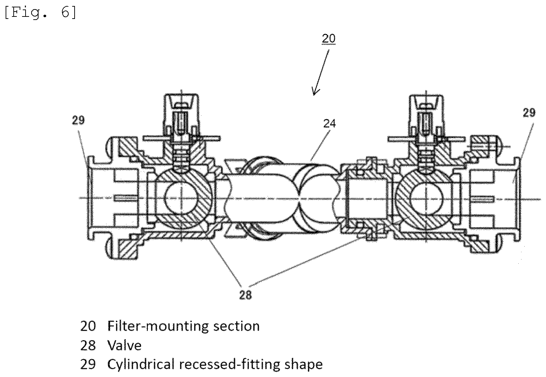

Fig. 6 is a partial sectional view of a valve section of the filter-mounting section in the first embodiment of the present invention. Both sides of the filter-mounting section 20 are provided with valves 28 having opening/closing functions. The one end opening of the filter storing section 24 is placed between the pair of valves 28. When the filter 25 is attached to and detached from the filter storing section 24, both the valves 28 are closed. After the flow of the heating medium in the filter-mounting section 20 is stopped by closing both the valves 28, maintenance is performed.

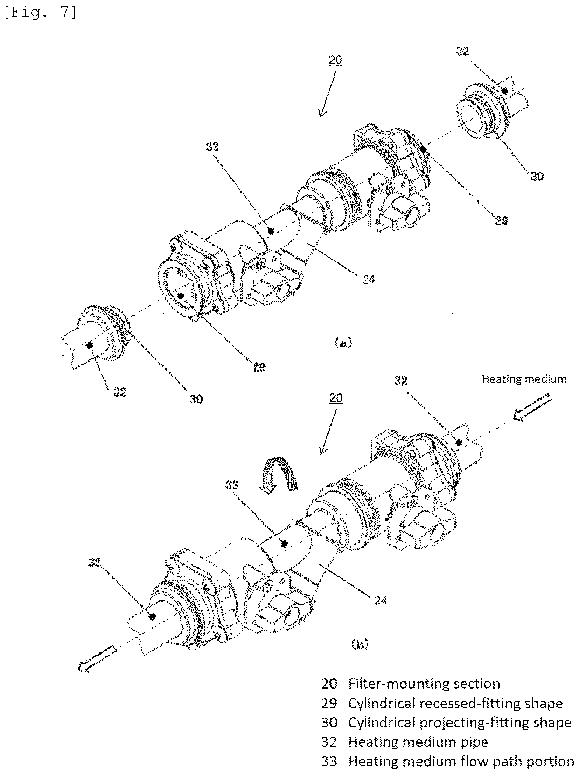

Fig. 7(a) is a diagram of a structure before the filter-mounting section and the heating medium pipes in the first embodiment of the invention are connected to each other, and Fig. 7(b) is a diagram of a structure after the filter-mounting section and the heating medium pipes are connected to each other. Cylindrical recessed-fitting shapes 29 which will be connected to heating medium pipes 32 are formed on both ends of the filter-mounting section 20.

The heating medium pipes 32 are connected to both the ends of the filter-mounting section 20 such that the heating medium flow path portion 33 and the heating medium pipes 32 are coaxially aligned with each other in series. Ends of the heating medium pipes 32 are cylindrical projecting-fitting shapes 30 which fitted to the cylindrical recessed-fitting shapes 29 formed on the filter-mounting section 20.

These cylindrical recessed and projecting fitting connection structures are configured such that the cylindrical projecting-fitting shapes 30 are inserted into the cylindrical recessed-fitting shapes 29 and they are crimped, fitted and connected to each other through annular fasteners (not shown). Since the heating medium flow path portion 33 is coaxially connected to the heating medium pipes 32, an operator can connect the filter-mounting section 20 and the heating medium pipes 32 to each other by rotating the filter-mounting section 20. In the cylindrical recessed and projecting fitting connection structures, shapes of the mutual ends may be opposite to each other between these parts.

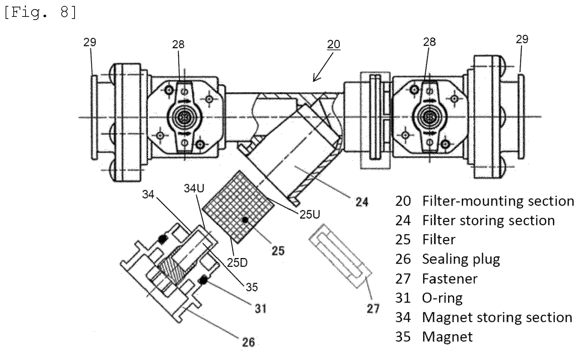

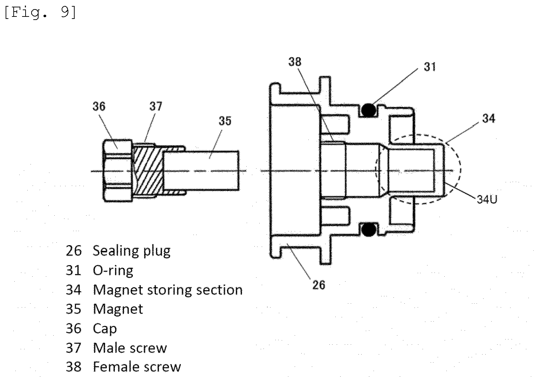

Fig. 8 is a part development view of the filter-mounting section in the first embodiment of the invention, and Fig. 9 is a part development view of the sealing plug of the warm water circulation device in the first embodiment of the invention.

If an annular fastener 27 which fixes the filter storing section 24 and the sealing plug 26 to each other is detached and then the sealing plug 26 mounted on the lower end opening of the filter storing section 24 is detached from the filter storing section 24, the filter 25 can be detached from the filter storing section 24.

An O-ring 31 is mounted around the sealing plug 26. The O-ring 31 prevents a heating medium such as antifreeze liquid from leaking outside when the sealing plug 26 is mounted on the filter storing section 24.

An upper end of the sealing plug 26 which is closest to the heating medium flow path portion 33 is provided with the magnet storing section 34, and the magnet 35 can be inserted from one end into a cylindrical hole provided in an inner side of the magnet storing section 34.

A cap 36 can detachably be mounted on the sealing plug 26 from the other end of the magnet 35. The cap 36 and the magnet 35 are fixed to each other through an adhesive or the like. That is, an inner surface of the magnet storing section 34 and the cap 36 cover a periphery of the magnet 35.

The cap 36 is provided with a male screw 37, and the sealing plug 26 is provided with a female screw 38. According to this, the cap 36 can fix the magnet 35 to the magnet storing section 34, and can detachably be mounted on the sealing plug 26.

According to this, after the sealing plug 26 is detached from the filter storing section 24, if the cap 36 is detached from the sealing plug 26, the magnet 35 can be taken out from the sealing plug 26. If the magnet 35 is taken out from the sealing plug 26, foreign matters of magnetic bodies such as iron powder and copper which are sucked onto the outer surface of the magnet storing section 34 are removed from the outer surface of the magnet storing section 34. Therefore, it is possible to easily remove the foreign matters.

The heat pump warm water heating device of this embodiment has the following effects as described above.

The magnet storing section 34 which covers the periphery of the magnet 35 and stores the magnet is placed inside the filter 25 having the function to collect foreign matters. According to this, it is possible to miniaturize a part which removes foreign matters flowing through the heating medium circulation circuit 3. Further, since the magnet 35 is not in direct contact with a heating medium, a possibility of corrosion or the like is low, and endurance of the magnet 35 can be enhanced.

The warm water circulation device includes the sealing plug 26 which is detachably mounted on the heating medium circulation circuit 3, and the magnet storing section 34 is provided on the sealing plug 26. According to this, when the sealing plug 26 is detached from the filter storing section 24 of the heating medium circulation circuit 3, the magnet 35 which is stored in the magnet storing section 34 is also detached from the filter storing section 24 of the heating medium circulation circuit 3. Therefore, foreign matters of magnetic bodies which adhere to the outer surface of the magnet storing section 34 can easily be removed, and it is possible to provide a warm water circulation device having excellent maintainability.

Further, the magnet storing section 34 is made of non-magnetic body material, and the magnet 35 is detachably stored in the magnet storing section 34. Therefore, since the magnet 35 is covered with the non-magnetic body material, foreign matters of the magnetic bodies in the heating medium circulation circuit 3 do not adhere directly to the magnet 35,and the foreign matters adhere to the outer surface of the magnet storing section 34 by the adsorption force of the magnet 35.

According to this, the adsorption force of the magnet 35 with respect to the foreign matters of the magnetic bodies which adhere to the outer surface of the magnet storing section 34 is interrupted or blocked by detaching the sealing plug 26 provided with the magnet storing section 34 from the filter storing section 24 of the heating medium circulation circuit 3 and by detaching the magnet 35 from the magnet storing section 34. Therefore, it is possible to easily remove the foreign matters of magnetic bodies which adhere to the outer surface of the magnet storing section 34, and it is possible to provide a warm water circulation device having excellent maintainability.

Further, since the sealing plug 26 holds the filter 25 detachably, the sealing plug 26 can be mounted on the filter storing section 24 of the heating medium circulation circuit 3 and the filter 25 and the magnet 35 stored in the magnet storing section 34 can be placed in the filter storing section 24 of the heating medium circulation circuit 3 at the same time. Therefore, foreign matters of magnetic bodies flowing through the heating medium circulation circuit 3 can be removed, and it is possible to provide a warm water circulation device having excellent assemblability.

### [INDUSTRIAL APPLICABILITY]

As described above, according to the present invention, since it is possible to miniaturize a part which collect foreign matters flowing together with warm water, the warm water circulation device of the invention can be applied not only to domestic warm water circulation devices but also to warm water circulation devices for professional use.

### [EXPLANATION OF SYMBOLS]

- 1: exterior body
- 2: cooling medium circuit (heat source)
- 3: heating medium circulation circuit
- 4: evaporator
- 5: compressor
- 6: water cooling medium heat exchanger
- 7: decompression device (expansion valve)
- 8: heating terminal
- 9: circulation pump
- 10: pressure relief valve
- 11: purge valve
- 12: flow sensor
- 13: expansion tank
- 14: pressure gauge
- 15: auxiliary heater
- 16: heating medium forward port
- 17: heating medium forward pipe
- 18: heating medium backward pipe
- 19: heating medium backward port
- 20: filter-mounting section
- 21: exterior side plate
- 22: opening
- 23: opening/closing plate
- 24: filter storing section
- 25: filter
- 26: sealing plug
- 27: fastener
- 28: valve
- 29: cylindrical recessed-fitting shape
- 30: cylindrical projecting-fitting shape
- 31: O-ring
- 32: heating medium pipe
- 33: heating medium flow path portion
- 34: magnet storing section
- 35: magnet
- 36: cap
- 37: male screw
- 38: female screw

## Claims

1. A warm water circulation device comprising:
a heat source (2);
a heating medium circulation circuit (3) through which a heating medium heated by the heat source (2) circulates;
a filter-mounting section (20) including a heating medium flow path portion (33) which forms a flow path of the heating medium, and a filter storing section (24) which is inclined with respect to the heating medium flow path portion (33) and which stores a cylindrical filter (25) having a function to collect a foreign matter, wherein:
one end opening of the filter storing section (24) is located in the heating medium flow path portion (33); and a sealing plug (26) mounted detachably on the other end opening of the filter storing section (24) and being provided with a magnet storing section (34) for covering a periphery of a magnet (35) and storing the magnet (35);
an upper end (34U) of at least the magnet storing section (34) is located higher than a lower end (25D) of the filter (25) in a height direction of the warm water circulation device;
the heat source (2) and the heating medium circulation circuit (3) are placed in one exterior body (1) having an opening (22);
the opening (22) is placed at a position opposed to the filter-mounting section (20);
the filter-mounting section (20) is placed in the heating medium circulation circuit (3) downstream from a heating medium backward port (19) and upstream from a circulation pump (9);
the filter-mounting section (20) is placed at a position in the exterior body (1) opposed to an exterior side plate (21) of the exterior body (1) at the same height as that of the heating medium backward port (19);
the opening (22) is provided with an opening/closing plate (23) which closes the opening (22), and the opening/closing plate (23) is fixed to the exterior side plate (21) through a fastening tool (e.g. screw), and closes the opening (22) in normal times; and
the filter-mounting section (20) is placed in the exterior body (1) such that the heating medium flow path portion (33) is directed in a horizontal direction, the other end opening of the filter storing section (24) is located downstream of the heating medium flow path portion (33) from the one end opening of the filter storing section (24), and the other end opening of the filter storing section (24) is located at a position lower than the heating medium flow path portion (33).

2. The warm water circulation device according to claim 1, wherein
the magnet storing section (34) is made of non-magnetic body material, and the magnet (35) is detachably stored in the magnet storing section (34).

3. The warm water circulation device according to claim 1, wherein
the sealing plug (26) detachably holds the filter (25).

4. The warm water circulation device according to claim 2, wherein
the non-magnetic body material is resin or non-magnetic body metal.

5. The warm water circulation device according to claim 1, wherein
the heat source (2) is a cooling medium circuit (2), and the heating medium is water or antifreeze liquid.

## Patentansprüche

1. Warmwasser-Zirkulationsvorrichtung, umfassend:
eine Wärmequelle (2);
einen Heizmedium-Zirkulationskreislauf (3), durch den ein von der Wärmequelle (2) erwärmtes Heizmedium zirkuliert;
eine Filtermontagesektion (20) mit einem Heizmedium-Strömungswegabschnitt (33), der einen Strömungsweg des Heizmediums bildet, und einer Filterlagersektion (24), die in Bezug auf den Heizmedium-Strömungswegabschnitt (33) geneigt ist und die einen zylindrischen Filter (25) lagert, der eine Funktion zum Einsammeln eines Fremdstoffs hat,
wobei:
eine Endöffnung der Filterlagersektion (24) in dem Heizmedium-Strömungswegabschnitt (33) angeordnet ist; und ein Dichtungsstopfen (26) abnehmbar an der anderen Endöffnung der Filterlagersektion (24) angebracht ist und mit einer Magnetlagersektion (34) zum Abdecken eines Umfangs eines Magneten (35) und zum Lagern des Magneten (35) versehen ist;
ein oberes Ende (34U) von wenigstens der Magnetlagersektion (34) in einer Höhenrichtung der Warmwasser-Zirkulationsvorrichtung höher als ein unteres Ende (25D) des Filters (25) angeordnet ist;
die Wärmequelle (2) und der Heizmedium-Zirkulationskreislauf (3) in einem Außenkörper (1) angeordnet sind, der eine Öffnung (22) aufweist;
die Öffnung (22) an einer der Filtermontagesektion (20) gegenüberliegenden Position angeordnet ist;
die Filtermontagesektion (20) in dem Heizmedium-Zirkulationskreislauf (3) stromabwärts von einem Heizmedium-Rücklaufanschluss (19) und stromaufwärts von einer Umwälzpumpe (9) angeordnet ist;
die Filtermontagesektion (20) an einer einer äußeren Seitenplatte (21) des Außenkörpers (1) gegenüberliegenden Position im Außenkörper (1) auf der gleichen Höhe wie der Heizmedium-Rücklaufanschluss (19) angeordnet ist;
die Öffnung (22) mit einer Öffnungs-/Verschlussplatte (23) versehen ist, die die Öffnung (22) verschließt, und die Öffnungs-/Verschlussplatte (23) durch ein Befestigungsmittel (beispielsweise eine Schraube) an der äußeren Seitenplatte (21) befestigt ist und die Öffnung (22) in normalen Zeiten verschließt; und
die Filtermontagesektion (20) in dem Außenkörper (1) so angeordnet ist, dass der Heizmedium-Strömungswegabschnitt (33) in eine horizontale Richtung gerichtet ist, die andere Endöffnung der Filterlagersektion (24) stromabwärts des Heizmedium-Strömungswegabschnitts (33) von der einen Endöffnung der Filterlagersektion (24) angeordnet ist, und die andere Endöffnung der Filterlagersektion (24) an einer Position niedriger als der Heizmedium-Strömungswegabschnitt (33) angeordnet ist.

2. Warmwasser-Zirkulationsvorrichtung nach Anspruch 1, wobei
die Magnetlagersektion (34) aus einem nicht-magnetischen Körpermaterial gefertigt ist und der Magnet (35) in der Magnetlagersektion (34) abnehmbar gelagert ist.

3. Warmwasser-Zirkulationsvorrichtung nach Anspruch 1, wobei
der Dichtungsstopfen (26) den Filter (25) abnehmbar hält.

4. Warmwasser-Zirkulationsvorrichtung nach Anspruch 2, wobei
das nicht-magnetische Körpermaterial Kunstharz oder nicht-magnetisches Körpermetall ist.

5. Warmwasser-Zirkulationsvorrichtung nach Anspruch 1, wobei
die Wärmequelle (2) ein Kühlmittelkreislauf (2) ist und das Heizmedium Wasser oder Frostschutzmittel ist.

## Revendications

1. Dispositif de circulation d'eau chaude comprenant :
une source de chaleur (2) ;
un circuit de circulation de fluide caloporteur (3) à travers lequel circule un fluide caloporteur chauffé par la source de chaleur (2) ;
une section de montage de filtre (20), comprenant une partie de trajet d'écoulement (33) de fluide caloporteur qui forme un trajet d'écoulement du fluide caloporteur, et une section de stockage de filtre (24) qui est inclinée par rapport à la partie de trajet d'écoulement (33) de fluide caloporteur et qui stocke un filtre cylindrique (25) présentant une fonction pour collecter une matière étrangère :
une ouverture d'extrémité de la section de stockage de filtre (24) étant située dans la partie de trajet d'écoulement (33) de fluide caloporteur ; et un bouchon d'étanchéité (26) monté de manière détachable sur l'autre ouverture d'extrémité de la section de stockage de filtre (24) et pourvu d'une section de stockage d'aimant (34) pour recouvrir une périphérie d'un aimant (35) et stocker l'aimant (35) ;
une extrémité supérieure (34U) d'au moins la section de stockage d'aimant (34) étant située plus haut qu'une extrémité inférieure (25D) du filtre (25) dans une direction de hauteur du dispositif de circulation d'eau chaude ;
la source de chaleur (2) et le circuit de circulation de fluide caloporteur (3) étant placés dans un corps extérieur (1) présentant une ouverture (22) ;
l'ouverture (22) étant placée en une position opposée à la section de montage de filtre (20) ;
la section de montage de filtre (20) étant placée dans le circuit de circulation de fluide caloporteur (3) en aval d'un orifice arrière de fluide caloporteur (19) et en amont d'une pompe de circulation (9) ;
la section de montage de filtre (20) étant placée en une position dans le corps extérieur (1) opposée à une plaque latérale extérieure (21) du corps extérieur (1) à la même hauteur que celle de l'orifice arrière de fluide caloporteur (19) ;
l'ouverture (22) étant pourvue d'une plaque d'ouverture/fermeture (23) qui ferme l'ouverture (22) et la plaque d'ouverture/fermeture (23) étant fixée à la plaque latérale extérieure (21) par l'intermédiaire d'un outil de fixation (par exemple une vis) et fermant l'ouverture (22) en temps normal ; et
la section de montage de filtre (20) étant placée dans le corps extérieur (1) de telle sorte que la partie de trajet d'écoulement (33) de fluide caloporteur est dirigée dans une direction horizontale, l'autre ouverture d'extrémité de la section de stockage de filtre (24) étant située en aval de la partie de trajet d'écoulement (33) de fluide caloporteur par rapport à ladite une ouverture d'extrémité de la section de stockage de filtre (24) et l'autre ouverture d'extrémité de la section de stockage de filtre (24) étant située en une position inférieure à celle de la partie de trajet d'écoulement (33) de fluide caloporteur.

2. Dispositif de circulation d'eau chaude selon la revendication 1,
la section de stockage d'aimant (34) étant constituée d'un matériau de corps non magnétique et l'aimant (35) étant stocké de manière détachable dans la section de stockage d'aimant (34).

3. Dispositif de circulation d'eau chaude selon la revendication 1,
le bouchon d'étanchéité (26) maintenant le filtre (25) de manière détachable.

4. Dispositif de circulation d'eau chaude selon la revendication 2,
le matériau de corps non magnétique étant une résine ou un métal de corps non magnétique.

5. Dispositif de circulation d'eau chaude selon la revendication 1,
la source de chaleur (2) étant un circuit de fluide réfrigérant (2) et le fluide caloporteur étant de l'eau ou un liquide antigel.
